Europäisches Patentamt

(19) European Patent Office

Office européen des brevets

(11) Publication number : **0 266 806 B1**

# EUROPEAN PATENT SPECIFICATION

(12)

(45) Date of publication of patent specification :
**11.12.91 Bulletin 91/50**

(51) Int. Cl.[5] : **F03C 1/22, F04B 1/10, F16J 15/48**

(21) Application number : **87201436.0**

(22) Date of filing : **27.07.87**

(54) Hydraulic motor comprising radially arranged, tubular propulsion elements.

(30) Priority : **11.08.86 IT 2146686**

(43) Date of publication of application :
**11.05.88 Bulletin 88/19**

(45) Publication of the grant of the patent :
**11.12.91 Bulletin 91/50**

(84) Designated Contracting States :
**AT BE CH DE ES FR GB IT LI NL**

(56) References cited :
**DE-A- 2 015 890**
**DE-B- 1 503 313**
**FR-A- 1 193 072**
**FR-A- 2 089 102**
**GB-A- 1 357 995**
**US-A- 3 396 976**
**US-A- 3 577 830**
**US-A- 3 742 819**
**US-A- 3 834 719**

(56) References cited :
SOVIET INVENTIONS ILLUSTRATED, Section Mechanical, Week 84/01, abstract no. 004813, Q55, Derwent Publications Ltd., London, GB; & SU - A 1000582 (Odess Stroigidravli) 05-03-1983
SOVIET INVENTIONS ILLUSTRATED, Section Mechanical, Week C38, 29th October 1980, abstract no. J2257, Q55, Derwent Publications Ltd., London, GB; & SU - A - 714042 (Odess Stroigidravli) 05-02-1980

(73) Proprietor : **RIVA CALZONI S.p.A.**
**Via Stendhal, 34**
**I-20144 Milano (IT)**

(72) Inventor : **Ortelli, Aurelio**
**Via Saragozza 115**
**Bologna (IT)**

(74) Representative : **Raimondi, Alfredo, Dott. Ing. Prof. et al**
**Studio Tecnico Consulenza Brevetti Piazzale Cadorna 15**
**I-20123 Milano (IT)**

## Description

The invention relates to a hydraulic motor comprising radial propulsors and tubular elements offering unimpeded flow, so that a hydraulic driving fluid can flow in and out freely from the sealing surfaces during each cycle.

There are many applications of hydraulic motors comprising radial propulsory means and substantially made up of a number of radial actuating means or propulsors acting on the eccentrit portion of a shaft and thus driving it in rotation when cyclically supplied with pressure fluid via a rotary distributor actuated by the drive shaft.

These motors usually have propulsors comprising radial pistons and respective connecting rods acting on a camshaft. However, these constructions present many problems owing to the wear on the sliding parts and the fact that the piston cylinders become oval as a result of the oblique thrust components.

In fact in this kind of motors the forces transmitted by the rods of the pistons to the camshaft are very high, in order to give the desired torque to the motor, and this causes problems for the lubrication of the surfaces in contact and their wear.

Motors of such kind are disclosed in FR-A-2.089.102 by J. Lucas, GB-A-1.357.995 by Robert Bosch Gmbh, DE-B-1.503.313 by Chamberlain Ind., all showing the above cited limitations.

A motor having telescopic propulsors disposed between an eccentric portion of the drive shaft and spherical caps borne in the external casing, which avoids the above cited problems because the thrust to the excentric is directly transmitted by the fluid, has been disclosed only in a schematic and theorical form in US-A-3.742.819 by Freese. This embodiment however, if pratically built, would lead to a radially bulky construction in order to get a lenght of the propulsors sufficient to ensure a correct mutual alignment of their telescopic elements also in extended position.

Moreover in this construction no means had been provided to prevent accidental temporary separations between the propulsors and the eccentric portion of the drive shaft and the spherical caps, due to inertial forces in some operating conditions, which can damage the sealing surfaces.

Mechanical locking means could be provided in the structure shown by Freese, in order to prevent these events, but this would mean a further radial enlargement of the motor in order to find place for such elements, which would require a greater lenght for the propulsors to give them place.

Other known motors have telescopic propulsors disposed between an eccentric spherical portion of the drive shaft and spherical caps borne in the external casing, through which the hydraulic fluid acts directly on the shaft portion thus driving it in rotation with substantially reduced wear. Motors of this kind are disclosed in Italian Patent Applications 21059 A/67 and 15255 A/69 by the present Applicant.

These motors comprising telescopic propulsory means have been found particularly efficient but still present the problem of permanently guiding the propulsors so as to ensure that they are coaxial even in the most extended position. For this reason, and also to avoid an excessively bulky motor, it is impossible to adopt the desired principle of construction, i.e. only using telescopic components to contain the fluid acting on the eccentric portion. As shown in detail in the cited patents, there is a need for internal guide means so as to provide a passage for supplying hydraulic fluid to the eccentric spherical surface of the shaft, since the shaft diameter allows only a limited change of fluid in the zone in question, resulting in problems of lubricating the metal parts in contact and subjected to hard working conditions, particularly with regard to evacuation of the heat generated during operation.

For this reason, the cited patents provided gaskets, subsequently replaced by deposition of metal on the surface of the eccentric spherical shaft portion so as to improve its characteristics. This treatment, however, is expensive and also subject to gradual wear, particularly in the event of cavitation of the motor.

The problem therefore is to provide an improved motor comprising radial propulsors in which the pressure of the hydraulic fluid acts directly on the eccentric shaft component while ensuring vigorous lubrication and dissipation of heat together with adequate guidance of the aligment between the propulsor components even when in the most extended position, while simultaneously ensuring minimum bulk in the radial direction and optimum distribution of forces in the external casing.

To this end, the invention provides a hydraulic motor having radial propulsors and comprising an outer casing in which a shaft is mounted and has an eccentric spherical portion around which a number of substantially radial propulsors are disposed, each propulsor comprising a first tubular member bearing in sealing-tight manner against a cap having a spherical surface and disposed in the outer casing, the first tubular member being telescopically coupled, with interposition of sealing means, to a second tubular member bearing in sealing-tight manner against the eccentric spherical portion of the shaft an inserted resilient means being adapted to urge the tubular members against the corresponding spherical contact surfaces, the caps and the outer casing being formed with ducts for supplying and discharging hydraulic fluid to and from the interior of the propulsors and connected to a rotary distributor actuated by the drive shaft, the outer casing being made up of two substantially symmetrical separate shells connected together, means being present for mechanically connecting the tubular propulsor members respectively to the spherical shaft portion and to the spherical-surface caps disposed in the casing, and the propulsory means being without other internal elements and enabling the hydraulic fluid during each cycle to flow and be replaced in the areas in contact with the spherical surfaces.

In a preferred embodiment, which provides a particularly compact structure, the first tubular member, which bears against one of the spherical-surface caps in the external casing, is inserted inside the second tubular member, bearing against the eccentric spherical portion of the shaft.

In this embodiment, the means for mechanically connecting the internal tubular propulsor members to the spherical cap surfaces are internally anchored to the tubular members, and conveniently comprise a tie rod connected to a disc coupled to the internal tubular member, the rod having a flared head bearing against a ring borne by the cap to which the internal tubular element is connected, the tubular element being free to oscillate on the tap surface, the length of the rod being such as to allow reduced clearance between the tap surface and the surface of the tubular element in contact therewith, sufficient to prevent wear during sliding.

The means for mechanically connecting the outer tubular propulsor members to the surface of a spherical driving-shaft portion comprise a pair of rings coaxial with the spherical portion and having a raised peripheral part for insertion in peripheral grooves on the outside of the outer tubular menbers near the surface in contact with the spherical portion of the shaft; optionally the rings are centred around cylindrical shaft portions coaxial with the spherical portion thereof, and secured thereto in the axial direction by resilient rings, or optionally the rings are free in the radial direction and locked in the axial direction in the respective positions by corresponding surfaces of the outer casing.

The sealing means interposed between the tubular propulsor members comprise a polymer ring having a cylindrical internal surface and a front surface which is flat towards the exterior of the propulsor, the ring being inserted with radial and axial clearance into a corresponding cavity in the external tubular member, leaving an axial and radial clear space in the cavity so as to allow hydraulic fluid at the operating pressure to flow from the interior of the propulsor into the cavity in contact with the polymer ring and thrust it in the axial direction so as to clamp its flat front surface against the edge of the cavity facing the end of the tubular menber and tightly seal it, the hydraulic fluid also transmitting a thrust in the radial direction clamping the polymer ring against the external wall of the internal tubular element and sealing it, the pressure of the hydraulic fluid keeping the polymer ring radially centred in its seat and keeping the internal tubular menber centred relative to the external tubular menber in the region in question.

In an advantageous embodiment, the front surface of the polymer ring facing the interior of the propulsor has one or more radial notches so that when the ring is pressed against the edge of the cavity towards the interior of the propulsor and there is a negative pressure inside the propulsor, the notches form passages for hydraulic fluid to flow from the interior of the casing into the interior of the propulsor and compensate the negative pressure and prevent cavitation.

In a preferred embodiment of the invention the outer casing is made up of two interconnected shells separated at a plane at right angles to the axis of the drive shaft and symmetrical relative to the bearings of the drive shaft, the plane also containing the axes of the propulsors.

Other details will be clear from the following description with reference to the accompanying drawings in which:

Fig. 1 is a general view of the motor according to the invention in section along plane I-I in Fig. 2;

Fig. 2 shows the motor according to the invention in section alone plane II-II in Fig. 1;

Fig. 3 shows a propulsory component of the motor along the invention in section, under conditions of minimum extension;

Fig. 4 shows the propulsory means in Fig. 3 under conditions of maximum elongation;

Fig. 5 shows a larger-stale detail in section of a sealing means, and

Fig. 6 shows an embodiment of the sealing means in Fig. 5.

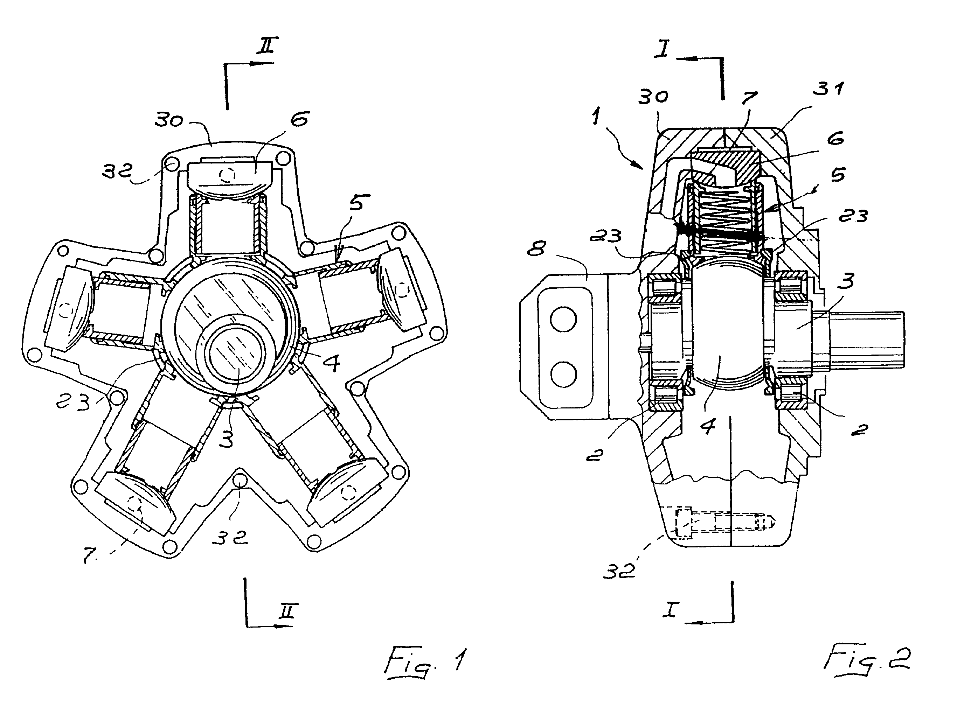

As shown in Figs. 1 and 2, the motor according to the invention comprises an external casing (general reference 1) inside which an eccentric shaft 3 is rotatably mounted on bearings 2 and has a spherical portion 4 integral therewith and eccentrically disposed relative to the axis of rotation of the motor.

A number of propulsory means 5 are disposed in substantially radial manner around the spherical portion 4 and bear at one end against portion 4 and at the other end against respective spherical caps 6 permanently housed in the external casing 1 and formed with ducts 7 for supplying hydraulic fluid to the propulsory means and terminating at a rotary distributor 8.

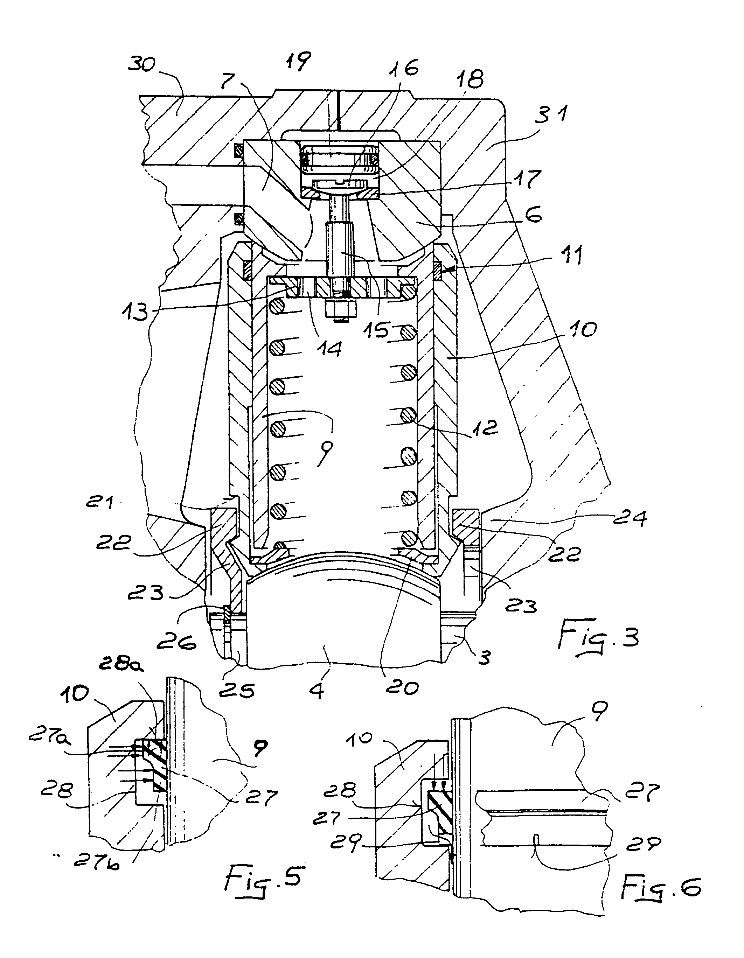

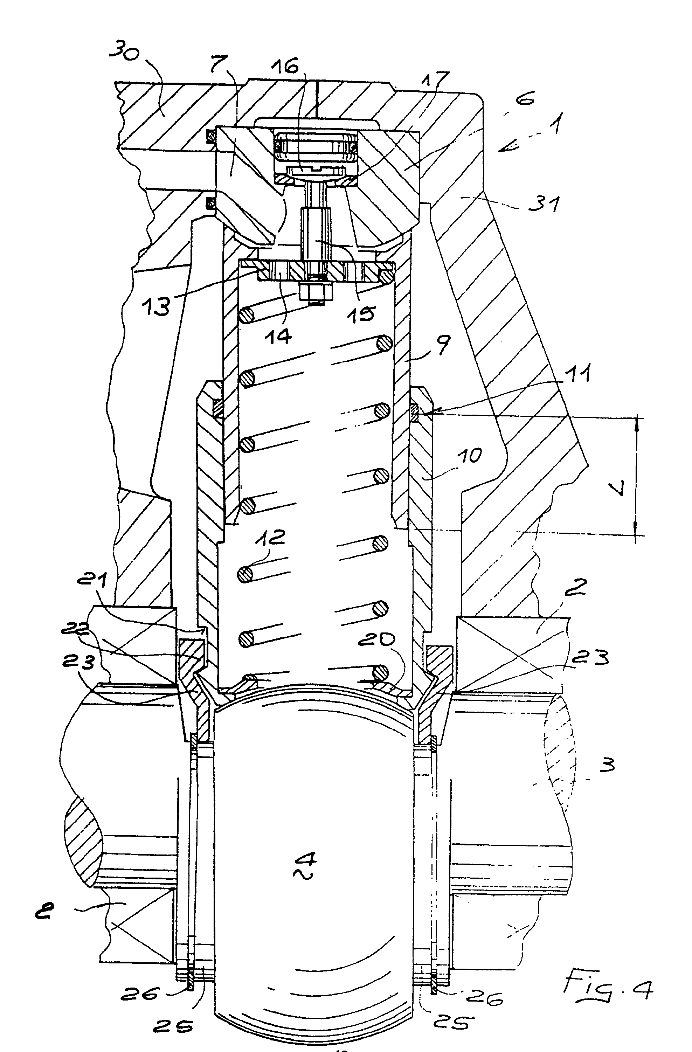

As shown in greater detail in Figs. 3 and 4, each propulsory means comprises an internal tubular member 9 bearing at one end against an associated cap 6 on which the external tubular member 10 is telescopically mounted and its end bears against the spherical portion 4 of shaft 3.

Sealing-tightness between members 9 and 10 is provided by a gasket 11, and a spring 12 inserted between members 9 and 10 is adapted to hold members 9 and 10 against cap 6 and portion 4 respectively.

The internal tubular member 9 is also mechanically connected to cap 6, against which it bears via a perforated disc 13 formed with wide holes 14 for hydraulic fluid to flow as required to and from the interior of the propulsory means, which is connected to a rod 15 having a head 16 bearing on a ring 17 inserted in an aperture 18 in cap 6 and blocked by a plug 19.

Spring 12 bears against disc 13, via which it acts against member 9, whereas its opposite end bears on a ring 20 coupled to member 10. Near the end bearing on the spherical portion 4, the external tubular member 10 has a circular recess 21 for inserting the raised edge 22 of a retaining ring 23 coaxial with the eccentric portion 4. Ring 23 is illustrated in Fig. 3 in two alternative embodiments, on the right and the left of the drawing respectively. The embodiment illustrated on the right of Fig. 3 comprises a floating ring bearing at the rear against the facing surface 24 of member 1, whereas the embodiment illustrated at the left of the drawing is a ring 23 centred around the eccentric portion 25 of shaft 3, which is adjacent and coaxial with the spherical portion 4, on which the ring is locked in the axial direction by a resilient ring 26 or the like.

The means for mechanically connecting members 9, 10 to the corresponding spherical contact surfaces 6 and 4, i.e. disc 13, rod 15 and rings 23, are adapted in either embodiment or in similar embodiments to prevent the tubular members becoming detached from the associated spherical contact surfaces under particular conditions in spite of the action of spring 12, if cavitation occurs in the propulsory means, e.g. if the motor is driven in rotation by the components connected to it. Such detachment of the tubular members would result in knocking or pounding, which would cause damage to the surfaces and loss of hydraulic sealing-tightness.

The retaining means allow a small clearance between the tubular members and the corresponding spherical contact surfaces so as to prevent wear during motion but so as to limit any detachment of the tubular members from the corresponding contact surfaces to a very small value and thus avoid damage even in such circumstances.

In order to reduce the bulk of the motor to a minimum without affecting the travel of the propulsors and without unacceptably reducing the length "L" of the coupled part of the internal and external tubular members under conditions of maximum extension as shown in Fig. 4, the internal tubular member is placed in contact with cap 6 whereas the external tubular member 10 bears against the spherical portion 4. The object is to prevent misalignment or jamming between members 9 and 10.

In this manner, the means for mechanically connecting the internal tubular member 9 can be disposed inside it and leave its external surface unimpeded up to the end in contact with the cap 6 so that the external member 10 can run over it in the minimum extended position illustrated in Fig. 3, whereas the rings 23, which must be disposed outside the associated tubular member, can be received in respective seats 21 on the tubular members without thereby restricting the maximum possible travel of the cylinders.

Consequently, since the required guidance of motion is guaranteed, it is not necessary to provide additional guide means inside the tubular members so as to take up part of the space, and consequently the hydraulic fluid entering the propulsors flows straight to the surface of the spherical portion 4, so that at each cycle there is a change in the hydraulic fluid touching the surface in contact between member 10 and spherical portion 4, which are lubricated so as to ensure complete evacuation of the heat generated and maintain optimum conditions for lubrication.

Consequently the surface of portion 4 and also of caps 6 can be without metal surface coatings or the like and thus prevented from jamming, even in the absence of seals on the coupling surfaces of members 9 and 10.

Advantageously the tubular propulsor components are hydrostatically balanced so that the areas of each member acted upon axially by the fluid pressure are such that in every case the tubular members are urged against the associated spherical surfaces, thus guaranteeing sealing-tightness under all conditions, in co-operation with the spring 12.

In order to prevent "back-pressure" due to infiltration of hydraulic fluid between the end surfaces of the tubular members and the corresponding spherical surfaces in contact, the end surfaces of the tubular members are made up of narrow circular rings so as to limit the area subjected to the thrust of the infiltrating fluid.

As a result therefore of the improved lubrication conditions, the described structure greatly prolongs the life of the motor without requiring maintenance or reducing the capacity.

The seal 11 disposed between member 9 and member 10 is adapted to maintain hydraulic sealing-tightness between them, with a low coefficient of wear and reduced bulk in the radial direction. It also constitutes the front surface on which member 10 moves on member 9. As Fig. 5 shows, the seal 11 comprises a polymer ring 27 inserted into a corresponding cavity 28 formed in member 10 with axial and radial clearance.

As shown by arrows in Fig. 5, the pressure of the hydraulic fluid operates in the axial direction, moving ring 27 to the end of cavity 28, and also in the radial direction, clamping the ring around member 9.

The result is the formation of an annular layer of hydraulic fluid outside the ring and subject to the motor operating pressure in uniform manner along its entire periphery. The result, combined with the friction of the ring against the edge of its seat, is that ring 27 and the tubular member 9 surrounded by it remain in position centred in member 10 and substantially reduce the possible misalignment of members 9, 10 when in the extended position. The only possible angular oscillations are those permitted by the clearance between the internal wall of member 10 and the external wall of member 9 near the free end of member 9. Ring 27, which also acts as a sliding shoe, guarantees that the two tubular members remain coaxial at the end region of member 10.

As the drawings show, ring 27 of seal 11 advantageously has a portion 27a wide enough to ensure an axial seal against the front edge 28a of its seat, and a thinner portion 27b giving the ring the flexibility required for easy fitting into its seat.

As shown also in Fig. 6, the surface of ring 27 facing the interior of the propulsor may advantageously be formed with one or more radial notches 29. In that case, if a negative pressure occurs inside the propulsor, e.g. if the motor is driven in rotation by components connected to it, the pressure of the hydraulic fluid inside casing 1, represented by arrows P in the drawing, urges the ring from the side opposite its seat and presses it against the wall of the cavity facing the interior of the propulsor. Under these conditions, cavities 29 allow fluid to flow from the casing to the interior of the propulsor, thus balancing the pressure inside and preventing a vacuum or associated cavitation, which cause irregular operation and premature wear of the motor.

Ring 27 in short acts as a one-way valve ensuring sealing-tightness at the pressure inside the propulsor under normal operating conditions, though permitting hydraulic fluid to enter if the pressure drops.

The external casing 1 of the motor according to the invention, as illustrated in Figs. 1 and 2, is made up of two symmetrical stellar shells 30 and 31, each housing one of the bearings 2 and forming half of the seat receiving the caps 6. Shells 30, 31 are coupled by screws 32 with interposition of a gasket for sealing the hydraulic lubricating fluid inside the frame.

The frame is constructed so that stresses due to the action of the propulsors are symmetrical in the two shells, resulting in equal deformation thereof in the absence of relative motion between them. Consequently, screws 32 are not subjected to forces during operation of the motor, since they do not have to counteract differences in the deformation of the parts in contact or withstand the thrust of the propulsors, and the seal is not damaged by possible relative motion between the parts in contact when different constructions are adopted.

The two shells are also particularly advantageous both because they reduce the bulk and can improve the distribution of forces in the structure and thus reduce the thickness of the frame, and also because the required machining is less extensive and simpler and it is easier to install the propulsors and other components in the motor and thus save substantial costs.

Many variants can be adopted without thereby departing from the scope of the invention in its general features.

## Claims

1. A hydraulic motor of the radial propulsors type comprising an outer casing (1) in which a shaft (3) is mounted, having an eccentric spherical portion around which a number of substantially radial propulsors (5) are disposed, in connection with corresponding caps (6) having a spherical surface and disposed in the outer casing (1), the caps (6) and the outer casing (1) being formed with ducts (7) for supplying and discharging hydraulic fluid to and from the interior of the propulsors and connected to a rotary distributor (8) actuated by the drive shaft, characterized in that each propulsor (5) comprises a first tubular member (9) bearing in sealing-tight manner against one of the caps (6) having spherical surfce, the first tubular member (9) being telescopically coupled, with interposition of sealing and guide means, to a second tubular member (10) bearing in sealing-tight manner against the eccentric spherical portion of the shaft (3), an inserted resilient means (26) being adapted to urge the tubular members (10) against the corresponding spherical contact surfaces (4), the outer casing(1) being made up to two substantially symmetrical separate shells (30,31) connected together, and the propulsory means (5) being without other internal elements and enabling the hydraulic fluid during each cycle to flow and be replaced in the areas in contact with the spherical surfaces, mechanical means being also present for coupling the tubular propulsor members (9) respectively to the spherical shaft portion (4) and to the spherical surface caps (6) disposed in the casing, the sealing and guide means (13) keeping in alignment the tubular members (9,10) of the propulsor (5), when they are in extended position.

2. A hydraulic motor comprising radial propulsors (5), according to claim 1 characterized in that the first tubular member (9), which bears against one of the spherical surface caps (6) in the external casing, is inserted inside the second tubular member (10), bearing against the eccentric spherical portion (4) of the shaft (3).

3. A hydraulic motor comprising radial propulsors (5) according to claims 1 and 2, characterised in that the means for mechanically connecting the internal tubular propulsor members (9) to the spherical cap surfaces (6) are internally anchored to the tubular members (9).

4. A hydraulic motor comprising radial propulsors (5) according to claim 3, characterised in that the means for mechanically connecting the internal tubular members (9) to the spherical cap surfaces (6) comprise a tie rod (15) connected to a disc (13) coupled to the internal tubular member (9), the rod (15) having a flared head (16) bearing against a ring (17) borne by the cap (6) to which the internal tubular element (9) is connected, the tubular element being able to oscillate freely on the cap surface (6) and the length of the rod (15) being sufficient to allow a small clearance between the cap surface (6) and the surface of the tubular element (9) in contact therewith, the clearance being sufficient to avoid wear during sliding.

5. A hydraulic motor comprising radial propulsors (5) according to claims 1, 2 characterised in that the means for mechanically connecting the outer tubular propulsor members (10) to the surface of a spherical drive-shaft portion (4) comprise a pair of rings (23) coaxial with the spherical portion (4) and having a raised peripheral part (22) for insertion in peripheral grooves (21) on the outside of the outer tubular members (10) near the surface in contact with the spherical portion of the shaft.

6. A hydraulic motor comprising radial propulsors (5) according to claim 5, characterised in that the rings (23) are centred around cylindrical shaft portions coaxial with the spherical portion thereof, and secured thereto in the axial direction by resilient rings.

7. A hydraulic motor comprising radial propulsors (5) according to claim 5, characterised in that the rings (23) are free in the radial direction and locked in the axial direction in the respective positions by corresponding surfaces (24) of the outer casing (1).

8. A hydraulic motor comprising radial propulsors (5) according to claim 1, characterised in that the sealing and guide means (11) interposed between the tubular propulsor members (9,10) comprise a polymer ring (27) having a cylindrical internal surface and a front surface which is flat towards the exterior of the propulsor, the ring (27) being inserted with radial and axial clearance into a corresponding cavity (28) in the external tubular member (10), leaving an axial and radial clear space in the cavity (28) so as to allow hydraulic fluid at the operating pressure to flow from the interior of the propulsor into the cavity (28) in contact with the polymer ring (27) and thrust it in the axial direction so as to clamp its flat front surface (28a) against the edge of the cavity (28) facing the end of the tubular member (10) and seal it, the hydraulic fluid also transmitting a thrust in the radial direction clamping the polymer ring (27) against the external wall of the internal tubular element (9) and sealing it, the pressure of the hydraulic fluid keeping the polymer ring (27) radially centred in its seat and keeping the internal tubular member (9) centred relative to the external tubular member (10) in the region in question.

9. A hydraulic motor comprising radial propulsors (5) according to claim 8, characterised in that the front surface of the polymer ring (27) facing the interior of the propulsor (10) has one or more radial notches (29) so that when the ring is pressed against the edge of the cavity towards the interior of the propulsor (10) and there is a negative pressure inside the propulsor, the notches (29) form passages for hydraulic fluid to flow from the interior of the casing (1) into the interior of the propulsor and compensate the negative pressure and prevent cavitation.

10. A hydraulic motor comprising radial propulsors (5) according to one or more of the preceding claims, characterised in that the outer casing (1) is made up of two interconnected shells (30,31) separated at a plane at right angles to the axis of the drive shaft and symmetrical relative to the bearings of the drive shaft, the plane also containing the axes of the propulsors.

## Patentansprüche

1. Hydraulikmotor mit radialen Antriebselementen, umfassend: Ein Außengehäuse (1), in dem eine Welle (3) gelagert ist, die einen exzentrischen kugelförmigen Abschnitt aufweist, um den herum eine Anzahl von im wesentlichen radialen Antriebselementen (5) in Verbindung mit entsprechenden, eine kugelförmige Fläche aufweisenden und in dem Außengehäuse (1) angeordneten Kappen (6) angeordnet sind, wobei die Kappen (6) und das Außengehäuse (1) mit Kanälen (7) für die Zufuhr und Abfuhr von Hydraulikfluid in das Innere bzw. aus dem Inneren der Antriebselemente und verbunden mit einem von der Antriebswelle betätigten Drehverteiler (8) ausgebildet sind, dadurch **gekennzeichnet**, daß jedes Antriebselement (5) ein erstes rohrförmiges Element (9) aufweist, welches abgedichtet gegen eine der Kappen (6) mit kugelförmiger Fläche anliegt, wobei das erste rohrförmige Element (9) teleskopisch mit Zwischenlage von Dichtungs- und Führungsmitteln mit einem zweiten rohrförmigen Element (10) gekoppelt ist, welches abgedichtet gegen den exzentrischen kugelförmigen Abschnitt der Welle (3) anliegt, wobei eine eingesetzte federelastische Einrichtung (26) die rohrförmigen Elemente (10) gegen die entsprechenden kugelförmigen Kontaktflächen (4) drängt, das Außengehäuse (1) aus zwei miteinander verbundenen, im wesentlichen symmetrischen, getrennten Schalen (30, 31) besteht, und die Antriebseinrichtung (5) ohne weitere interne Elemente sind und dem Hydraulikfluid während jedes Zyklus ermöglicht, in die mit den kugelförmigen Flächen in Berührung stehenden Bereiche zu strömen und ersetzt zu werden, daß außerdem mechanische Mittel vorhanden sind, um die rohrförmigen Antriebselemente (9) mit dem kugelförmigen Wellenabschnitt (4) und den eine kugelförmige Fläche aufweisenden Kappen (6) in dem Gehäuse zu verbinden, wobei die Dichtungs- und Führungsmittel (13) die rohrförmigen Elemente (9, 10) des Antriebselements (5) ausgerichtet halten, wenn sie sich in der ausgedehnten Stellung befinden.

2. Hydraulikmotor mit radialen Antriebselementen (5) nach Anspruch 1, dadurch **gekennzeichnet**, daß das erste rohrförmige Element (9), welches gegen eine der eine kugelförmige Fläche aufweisenden Kappen (6) in dem Außengehäuse anliegt, in das Innere des zweiten rohrförmigen Elements (10) eingesetzt ist, welches gegen den exzentrischen kugelförmigen Abschnitt (4) der Welle (3) anliegt.

3. Hydraulikmotor mit radialen Antriebselementen (5) nach Anspruch 1 und 2, dadurch **gekennzeichnet**, daß die Mittel zum mechanischen Verbinden der inneren rohrförmigen Antriebselemente (9) mit den kugelförmigen Kappenflächen (6) intern mit den rohrförmigen Elementen (9) verankert sind.

4. Hydraulikmotor mit radialen Antriebselementen (5) nach Anspruch 3, dadurch **gekennzeichnet**, daß die Mittel zum mechanischen Verbinden der inneren rohrförmigen Elemente (9) mit den kugelförmigen Kappenflächen (6) eine Verbindungsstange (15) aufweisen, die mit einer an das innere rohrförmige Element (9) gekoppelten Scheibe (13) verbunden ist, wobei die Stange (15) einen aufgeweiteten Kopf (16) besitzt, der gegen einen Ring (17) anliegt, welcher von der Kappe (6) gehaltert wird, mit dem das innere rohrförmige Element (9) verbunden ist, das rohrförmige Element in der Lage ist, frei auf der Kappenfläche (6) zu schwingen, und die Länge der Stange (15) ausreicht, um ein geringes Spiel zwischen der Kappenfläche (6) und der damit in Berührung stehenden Fläche des rohrförmigen Elements (9) zuzulassen, wobei das Spiel ausreicht, um einen Verschleiß während des Gleitens zu vermeiden.

5. Hydraulikmotor mit radialen Antriebselementen (5) nach Anspruch 1, 2, dadurch **gekennzeichnet**, daß die Mittel zum mechanischen Verbinden der äußeren rohrförmigen Antriebselemente (10) mit der Oberfläche des kugelförmigen Antriebswellenabschnitts (4) ein Paar Ringe (23) aufweisen, die koaxial mit dem kugelförmigen Abschnitt (4) sind und einen erhöhten Umfangsteil (22) zum Einsetzen in Umfangsnuten (21) auf der Außenseite des äußeren rohrförmigen Elements (10) in der Nähe der mit dem kugelförmigen Abschnitt der Welle in Berührung stehenden Fläche aufweisen.

6. Hydraulikmotor mit radialen Antriebselementen (5) nach Anspruch 5, dadurch **gekennzeichnet**, daß die Ringe (23) um zu dem kugelförmigen Abschnitt der Welle koaxiale, zylindrische Wellenabschnitte zentriert und daran in axialer Richtung durch Federringe festgelegt sind.

7. Hydraulikmotor mit radialen Antriebselementen (5) nach Anspruch 5, dadurch **gekennzeichnet**, daß die Ringe (23) in radialer Richtung frei und in axialer Richtung in den jeweiligen Stellungen durch entsprechende Flächen (24) des Außengehäuses (1) verriegelt sind.

8. Hydraulikmotor mit radialen Antriebselementen nach Anspruch 1, dadurch **gekennzeichnet**, daß die Dichtungs- und Führungsmittel (11), die zwischen den rohrförmigen Antriebselementen (9, 10) liegen, aufweisen: Einen Polymerring (27) mit einer zylindrischen Innenfläche und einer Stirnfläche, die zum Äußeren des Antriebselements hin flach ist, wobei der Ring (27) mit radialem und axialem Spiel in eine entsprechende Ausnehmung (28) in dem äußeren rohrförmigen Element (10) eingesetzt ist, einen axialen und einen radialen Spielraum in der Ausnehmung (28) frei läßt, so daß Hydraulikfluid mit Arbeitsdruck aus dem Inneren des Antriebselements in den Hohlraum (28) hinein in Berührung mit dem Polymerring (27) strömen und diesen in axialer Richtung belasten kann, um seine flache Stirnfläche (28a) gegen den zum Ende des rohrförmigen Elements (10) weisenden Rand der Ausnehmung (28) zu klemmen und ihn abzudichten, wobei das Hydraulikfluid außerdem eine Belastung in radialer Richtung überträgt, um den Polymerring (27) gegen die Außenwand des inneren rohrförmigen Elements (9) anzupressen und es abzudichten, wobei der Druck des Hydraulikfluids den Polymerring (27) in seinem Sitz radial zentriert hält und das innere rohrförmige Element (9) relativ zu dem äußeren rohrförmigen Element (10) in der fraglichen Zone zentriert hält.

9. Hydraulikmotor mit radialen Antriebselementen (5) nach Anspruch 8, dadurch **gekennzeichnet**, daß die Stirnfläche des Polymerrings (27), die zu dem Inneren des Antriebselements (10) weist, eine oder mehrere Radialkerben (29) enthält, so daß, wenn der Ring gegen die Kante in Richtung auf das Innere des Antriebselements (10) gepreßt wird und ein Unterdruck im Inneren des Antriebselements herrscht, die Kerben (29) Durchlässe für Hydraulikfluid bilden, damit dieses vom Inneren des Gehäuses (1) in das Innere des Antriebselements strömt und den Unterdruck kompensiert und eine Kavitation verhindert.

10. Hydraulikmotor mit radialen Antriebselementen (5) nach einen oder mehreren der vorhergehenden Ansprüche, dadurch **gekennzeichnet**, daß das Außengehäuse (1) aus zwei miteinander verbundenen Schalen (30, 31) besteht, die in einer zur Achse der Antriebswelle rechtwinkligen Ebene getrennt sind und bezüglich den Lagern der Antriebswelle symmetrisch sind, wobei die Ebene außerdem die Achsen der Antriebselemente enthält.

**Revendications**

1. Moteur hydraulique du type à propulseurs radiaux, comprenant un boîtier extérieur (1) dans lequel un arbre (3) est monté, ayant une partie sphérique excentrique autour de laquelle un certain nombre de propulseurs (5) pratiquement radiaux sont disposés, en relation avec des calottes (6) correspondantes présentant une surface sphérique et disposées sur le boîtier extérieur (1), les calottes (6) et le boîtier extérieur (1) étant fabriqués avec des conduits (7) pour alimenter et décharger du fluide hydraulique vers et depuis l'intérieur des propulseurs et les connecter à un distributeur tournant (8), actionné par l'arbre d'entraînement, caractérisé en ce que chaque propulseur (5) comporte un premier élément tubulaire (9) portant d'une manière étanche contre l'une des calottes (6) ayant une surface sphérique, le premier élément tubulaire (9) étant couplé télescopiquement avec interposition des joints et des moyens de guidage à un second élément tubulaire (10) portant d'une manière étanche contre la partie sphérique excentrique de l'arbre (3), des moyens élastiques insérés (26) étant adaptés pour rappeler les éléments tubulaires (10) contre la surface (4) de contact sphérique correspondante, le boîtier extérieur (1) étant fabriqué en deux coquilles séparées (30, 31) pratiquement symétriques et reliées entre elles, et les moyens propulseurs (5) étant sans autre élément interne et permettant au fluide hydraulique pendant chaque cycle de circuler et d'être remplacé dans les zones en contact avec les surfaces sphériques, des moyens mécaniques étant aussi présents pour coupler les éléments (9) de propulseurs tubulaires respectivement à la partie d'arbre sphérique (4) et aux calottes de surface sphérique (6) disposées dans le boîtier, les joints et moyens de guidage (13) gardant l'alignement des éléments tubulaires (9, 10) du propulseur (5) quand ils sont en position allongée.

2. Moteur hydraulique comprenant des propulseurs radiaux (5) selon la revendication 1, caractérisé en ce que le premier élément tubulaire (9) qui porte contre l'une des calottes (6) de surface sphérique sur le boîtier externe, est inséré à l'intérieur du second élément tubulaire (10) portant contre la partie sphérique excentrique (4) de l'arbre (3).

3. Moteur hydraulique comprenant des propulseurs radiaux (5) selon les revendications 1 et 2, caractérisé en ce que les moyens pour connecter mécaniquement les éléments propulseurs tubulaires internes (9) aux surfaces des calottes sphériques (6) sont ancrés intérieurement aux éléments tubulaires (9).

4. Moteur hydraulique comprenant des propulseurs radiaux (5) selon la revendication 3, caractérisé en ce que les moyens pour connecter mécaniquement les éléments tubulaires internes (9) aux surfaces des calottes sphériques (6) comportent une biellette (15) connectée à un disque (13) couplé à l'élément tubulaire interne (9), la tige (15) ayant une tête plate ou écrasée (16) portant contre un anneau (17) porté par la calotte (6) sur laquelle l'élément tubulaire interne (9) est connecté, l'élément tubulaire étant capable d'osciller librement sur la surface de la calotte (6), et la longueur de la tige (15) étant suffisante pour permettre un faible jeu entre la surface (6) de la calotte et la surface de l'élément tubulaire (9) en contact l'un avec l'autre, le jeu étant suffisant pour éviter l'usure pendant le glissement.

5. Moteur hydraulique comprenant des propulseurs radiaux (5) selon les revendications 1 et 2, caractérisé en ce que les moyens pour connecter mécaniquement les éléments propulseurs tubulaires extérieurs (10) à la surface d'une partie (4) d'arbre d'entraînement comportent une paire d'anneaux (23) coaxiaux avec la partie sphérique (4) et ayant une partie (22) périphérique relevée pour insertion dans des rainures périphériques (21) sur l'extérieur des éléments (10) tubulaires extérieurs près de la surface en contact avec la partie sphérique de l'arbre.

6. Moteur hydraulique comprenant des propulseurs radiaux (5) selon la revendication 5, caractérisé en ce que les anneaux (23) sont centrés autour des parties d'arbre cylindriques coaxiales avec la partie sphérique et y sont fixés dans la direction axiale par des anneaux élastiques.

7. Moteur hydraulique comprenant des propulseurs radiaux (5) selon la revendication 5, caractérisé en ce que les anneaux (23) sont libres dans la direction radiale et verrouillés dans la direction axiale dans les positions respectives par des surfaces correspondantes (24) du boîtier extérieur (1).

8. Moteur hydraulique comprenant des propulseurs radiaux (5) selon la revendication 1, caractérisé en ce que les joints et moyens de guidage (11) interposés entre les éléments propulseurs tubulaires (9, 10) comportent un anneau en polymères (27) ayant une surface interne cylindrique et une surface avant qui est plate tournée vers l'extérieur du propulseur, l'anneau (27) étant inséré avec un jeu radial et axial dans une cavité correspondante (28) dans l'élément tubulaire externe (10), laissant un espace libre axial et radial dans la cavité (28) de façon à permettre au fluide hydraulique à la pression de fonctionnement, de circuler depuis l'intérieur du propulseur vers la cavité (28) en contact avec l'anneau en polymères (27) et en le poussant dans la direction axiale de façon à verrouiller sa surface (28a) avant plate contre le bord de la cavité (28) faisant face à l'extrémité de l'élément tubulaire (10) et le fermant, le fluide hydraulique transmettant aussi une poussée dans la direction axiale, bloquant l'anneau en polymères (27) contre la paroi externe de l'élément (9) tubulaire interne et le fermant, la pression du fluide hydraulique maintenant l'anneau polymère (27) centré radialement dans son siège et maintenant l'élément (9) tubulaire interne centré par rapport à l'élément tubulaire externe (10) dans la région en question.

9. Moteur hydraulique comprenant des propulseurs radiaux (5) selon la revendication 8, caractérisé en ce que la surface avant de l'anneau en polymères (27) faisant face à l'intérieur du propulseur (10) comporte au moins une encoche radiale (29) de telle sorte que, quand l'anneau est pressé contre le bord de la cavité vers l'intérieur du propulseur (10) et qu'il existe une pression négative à l'intérieur du propulseur, les encoches (29) constituent des passages pour le fluide hydraulique pour qu'il circule depuis l'intérieur du boîtier (1) vers l'intérieur du propulseur et compense la pression négative et évite la cavitation.

10. Moteur hydraulique comprenant des propulseurs radiaux (5) selon l'une au moins des revendications précédentes, caractérisé en ce que le boîtier extérieur (1) est réalisé en deux coquilles interconnectées (30, 31), séparées par un plan à angle droit par rapport à l'axe de l'arbre d'entraînement, et symétrique par rapport au palier de l'arbre d'entraînement, le plan contenant aussi les axes des propulseurs.

Fig. 2

Fig. 1

10

Fig. 3

Fig. 5

Fig. 6

Fig. 4